Europäisches Patentamt

European Patent Office

Office européen des brevets

(11) Publication number: **0 205 700**
**A1**

(12) **EUROPEAN PATENT APPLICATION**

(21) Application number: 85304658.9

(22) Date of filing: 28.06.85

(51) Int. Cl.⁴: **B 23 Q 7/03,** B 65 H 20/02, B 21 D 43/09

(43) Date of publication of application: 30.12.86
Bulletin 86/52

(84) Designated Contracting States: DE GB IT

(71) Applicant: AIOI SEIKI KABUSHIKI KAISHA,
1-9 Konoikeazakaidoshita, Itami-shi Hyogo-ken (JP)

(72) Inventor: Ichiro, Kitaura c/o Aioi Seiki Kabushiki Kaisha,
1-9 Aza Kaidoshita Konoike, Itamishi Hyogoken (JP)

(74) Representative: Alexander, Thomas Bruce et al, Boult,
Wade & Tennant 27 Furnival Street, London EC4A 1PQ
(GB)

(54) A band conveyor.

(57) The conveyor includes adjustable disc springs (25) for biasing together the rollers (2, 3) which grip the band (15), being adjustable using screw threaded stops (24) from outside the casing, and the driving means includes a torque limiter (7) which is adjustable by means of variably biased friction plates (12). The casing (1) includes guides (27) for automatically rolling the band on entry and the rollers include flanges for lateral guidance. The conveyor is useful in moving industrial workpieces over a cooperating support surface and provides for increased drive to be transmitted to the band whilst preventing damage to the band and to the drive means occuring when the band becomes obstructed by limiting the torque transmitted.

EP 0 205 700 A1

A BAND CONVEYOR

The present invention relates to band conveyors. Band conveyors are known for use in conveying a workpiece over a support means and comprising a band reciprocatingly moveable in use upon the support means, a casing for accommodating a rolled portion of the band, a first and second relatively moveable roller means, biasing means for urging the respective roller means together so as to grip the band therebetween, and driving means for driving the first roller means selectively in either direction of rotation.

Such types of band conveyors are widely used in association with workpiece processing machines, such as machine tools, injecting machines, heat treating machines, so as to transport workpieces for continuous operation. An example of the known band conveyors is disclosed in Japanese Utility Model Publication (unexamined) No.57-26923, on the invention made by the inventor.

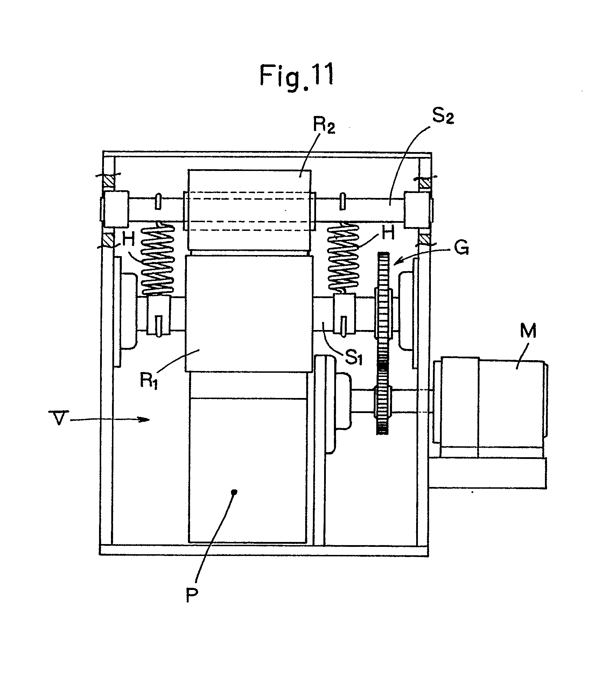

To explain this prior art band conveyor in detail, reference will be made to Figure 11:

A metal band (P) rolled up is accommodated in a chamber (V). The metal band (P) is protruded from the roll, and passed between rollers (R1) and (R2), which are rotated in a clockwise and counter-clockwise direction. When the two rollers are rotated in one direction, the metal band (P) is pushed forward, and when they are rotated in another direction, it is retracted into the original roll. A workpiece is placed on the metal band, and transported to the processing machine, wherein the metal band is reciprocatingly moved in a guide groove produced in the support means.

The rollers (R1) and (R2) include shafts (S1) and (S2), which are connected to each other by means of coil springs (H) so that the roller (R2) is biased toward the roller (R1) thereby to compress the metal band. However, the strength of the coil springs is limited, and consequently the compressive force of one roller against another is limited. This tends to weaken the friction drive to drive the metal band (P). As a result, the weight and size of the workpiece to be conveyed on the metal band (P) is limited.

Furthermore, the shaft (S1) is connected to a motor (M) through a gearing (G), and the roller (R1) is driven by the motor without any intermediate load controller. If, for example, a foreign matter, such as cutting chip, is introduced into the guide groove, it is likely to obstruct the metal band from smoothly moving between the rollers. This causes seizure on the metal band or distorts the same.

According to the present invention, a band conveyor is characterised in that the biasing means is adjustable to provide a variable degree of friction between the respective roller means and the band and in that the driving means includes a torque limiter.

The advantage of this arrangement is that overloading of the driving means and the band when the band is obstructed can be avoided by limiting the frictional force applied to the band and the torque transmitted from the driving means. Consequently the driving force applied to the band may be increased without fear of damage resulting when obstructed.

Preferably both the first and second roller means are driven by the driving means so as to impart frictional drive to both sides of the band.

Consequently the band drive is increased.

Conveniently the first and second roller means each comprise a single roller and the first and second rollers respectively are connected to first and second gears which mesh to transmit drive from one roller to the other and wherein relative movement of the rollers is accommodated by backlash between the gears.

Alternatively the first roller means comprises a single driven roller and the second roller means comprises a plurality of follower rollers which engage the band at intervals angularly spaced around the axis of the driven roller. In this way the drive to the band is increased by increasing the area over which friction is available.

Conveniently at least one pair of follower rollers are linked so as to share a common biasing means.

Advantageously the biasing means comprises a plurality of coned springs compressed between each roller or pair of rollers of the second roller means and respective adjustable stops which are adjustable from outside of the casing.

By adjusting the stop position, by screwing in or out for example, the compressive force of the spring and hence the biasing force is adjustable.

Preferably the torque limiter includes friction plates transmitting drive from a gear, the friction plates being adjustably biased into contact with the gear to facilitate adjustment of the limit of transmitted torque.

In a preferred embodiment the torque limiter comprises a boss secured to a shaft of the first roller means, a gear rotatable on the boss, the gear being rotated by engagement with a mating gear driven by the driving means, friction plates placed in tight contact with the gear, a coned disc spring biasing the friction plates toward the boss such that rotation of the gear is frictionally transmitted to the boss, and a nut screwed to the end of the shaft of the first roller means for adjusting the bias exerted by the spring.

Advantageously the casing includes guide means for urging the band into a roll when being driven into the casing.

Conveniently the roller means include flanges for laterally guiding the band.

Particular embodiments of the invention will now be described by way of example and with reference to the accompanying drawings of which:

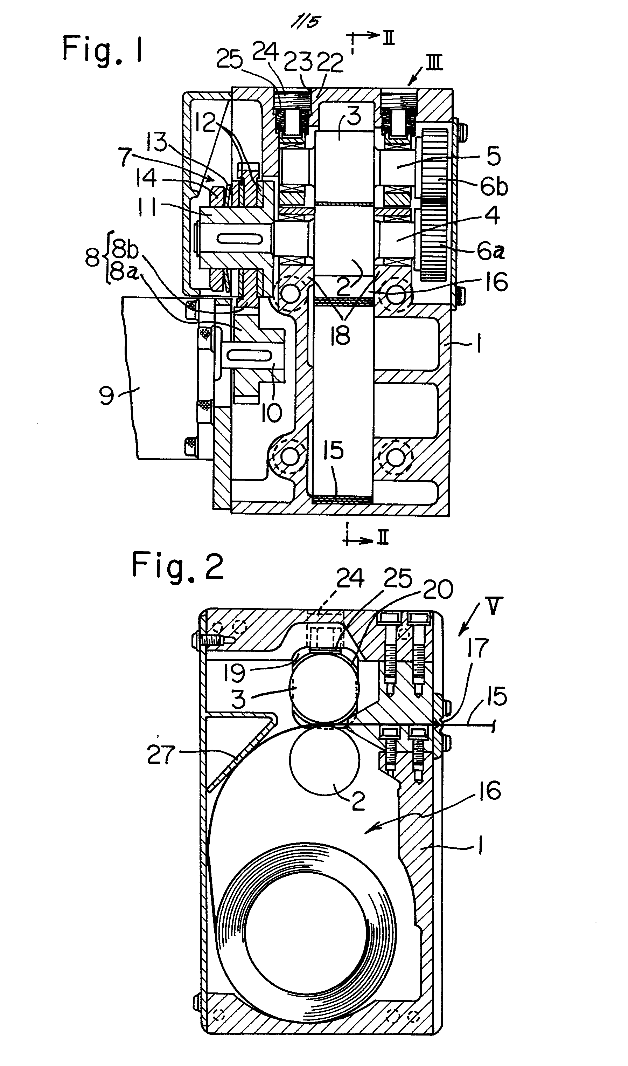

Figure 1 is a front view showing a band conveyor embodying the present invention;

Figure 2 is a vertical cross-section through the band conveyor taken along the line II-II in Figure 2;

Figure 3 is a fragmentary view on an enlarged scale showing the portion indicated by III in Figure 1;

Figure 4 is a cross-section taken along the line IV-IV in Figure 3;

Figure 5 is a fragmentary view on an enlarged scale showing the portion indicated by V in Figure 2;

Figure 6 is a vertical cross-section through a second example of the embodiment;

Figure 7 is a vertical cross-section through a third example of the embodiment;

Figure 8 is a cross-section taken along the line VIII-VIII in Figure 7;

Figure 9 is a cross-section taken along the line IX-IX in Figure 8;

Figure 10 is a cross-section on an enlarged scale snowing a main part of the fourth example of the embodiment; and

Figure 11 is a vertical cross-section showing a prior art band conveyor.

The reference numeral 1 denotes a casing in which a pair of rollers 2,3 having the same diameter are provided in its upper space. The rollers 2 and 3 have snafts 4 and 5 which are rotatively supported on the casing 1. The roller shafts 4 and 5 are connected by means of a pair of gears 6a and 6b such that they are rotated at the same speed. The shaft 4 of the lower roller 2 is connected to an output shaft 10 of an electric motor 9 having a speed reducer through a power transmission gearing 8 including a torque limiter 7.

The torque limiter 7 includes a boss 11 secured to the lower roller shaft 4, a free-moving gear 8b carried on the boss 11, which gear 8b is rotated by engagement with a mating gear 8a located at the side of the motor 9, friction plates 12 placed in tight contact with the free-moving gear 8b, a coned disc spring 13 biasing the friction plates 12 toward the boss 11 from the end of the shaft 4, and a nut 14 screwed to the end of the shaft 4. The nut 14 is used to adjust the strength of the coned disc spring 13.

There is provided an accommodating chamber 16 under the lower roller 2 in the casing 1, the chamber 16 accommodating a rolled steel band 15. The steel band 15 is pushed forward from and withdrawn to the roll, wherein it passes between the rollers 2 and 3. The rollers 2 and 3 impart friction drive to the steel band 15. Tne reference numeral 17 denotes an exit through which the steel band 15 is led out of and into the casing 1.

The lower roller shaft 4 is supported on the upright walls 18 of the casing 1 by means of a needle bearing (B). Each upright wall 18 is provided with a rectangular opening 19 at a place where the upper roller shaft 5 is supported. In the opening 19 a free-moving bearing 20 is carried in such a manner as to move up and down. The free-moving bearing 20 carries the upper roller shaft 5 through the needle bearing (B). The free-moving bearing 20 has a smooth, flat side surface so that it moves up and down along the inside wall 21 of the opening 19.

In an upper section of the wall above the opening 19 a slot 23 is produced to accommodate a stop or spring pusher 24 having a hexagonal bolt. The reference numberal 26 denotes a presser unit placed between the spring pusher 24 and the bearing 20. The presser unit 26 includes a coned disc spring 25, which includes a plurality of coned discs. By turning the spring pusher 24 the free-moving bearing 20 is pushed downwards through the presser unit 26. In this way the upper roller 3 is placed in contact with the lower roller 2. The upper roller shaft 5 and lower roller shaft 4 are respectively provided with gears 6a and 6b, which are mutually in engagement. By virtue of a backlash present between the two gears the upper roller shaft 5 can be shifted toward the lower roller shaft 4 in the range of the backlash. As evident from the description, by adjusting the strength of the spring 25 in the presser unit 26 a desired degree of friction drive is imparted to the steel band 15 by the rollers 2 and 3. When the compression becomes great, a greater frictional force exerts on the steel band, thereby securing a greater protruding or retracting force to act thereon.

When the motor 9 is driven in the clockwise direction, the rollers 2 and 3 are rotated in the counter-clockwise and clockwise directions respectively at the same speed. In this way the steel band 15 is pushed forward, and protruded out of the casing 1. When the motor 9 is rotated in the counter-clockwise direction, the steel band 15 is reversely moved to return into the original roll. If a foreign element or cutting chips are introduced in the path of the steel band, or if a workpiece placed on the steel band 15 is too heavy, a great frictional force exerts between the rollers 2,3 and the steel band 15. In this case the torque limiter 7 stops the transmission of the friction drive to the rollers 2 and 3, thereby preventing the steel band 15 from slipping therebetween.

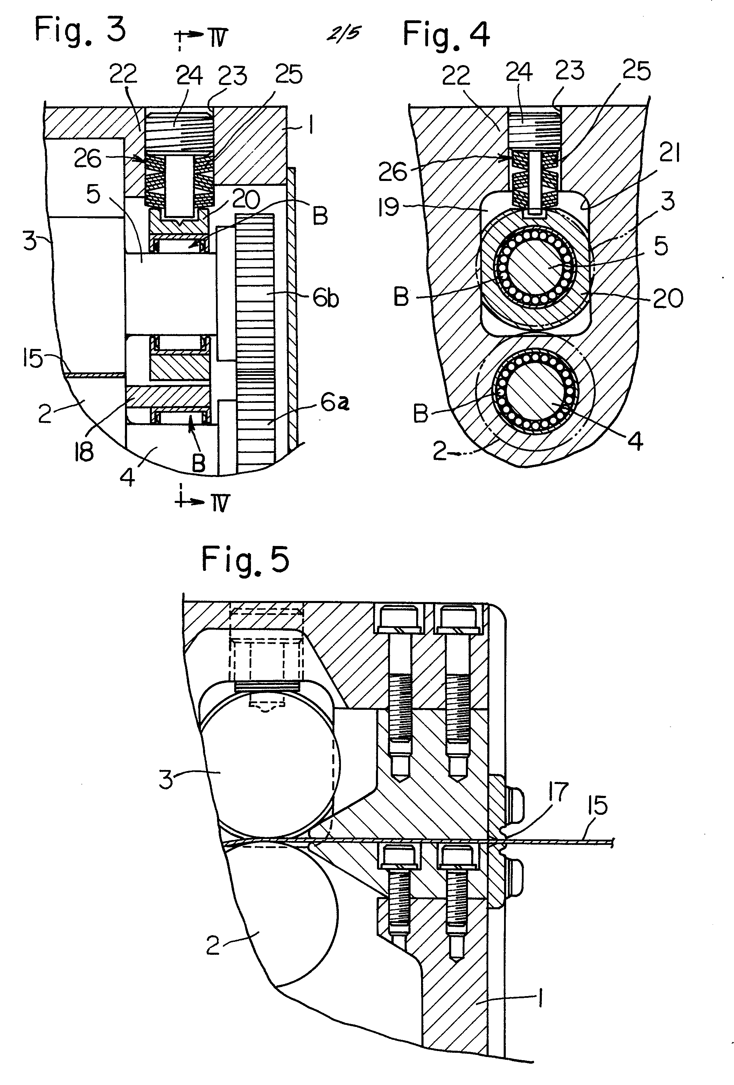

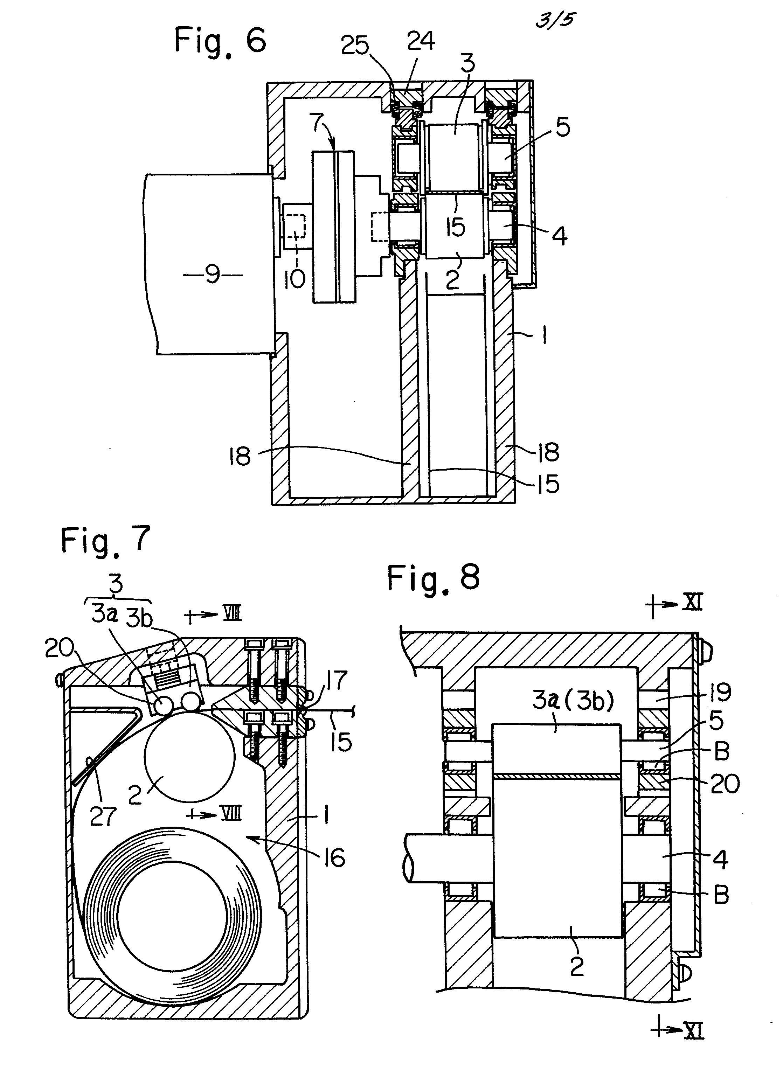

As best shown in Figure 6, the two upright walls 18 are spaced sufficiently to hold the steel band 15 crosswide so that the side walls provides a guide for allowing the steel band 15 to run straight, thereby eliminating the need for using any core around which the steel band 15 is rolled. Preferably the steel band 15 is previously given a tendency of curling inwards, under which the steel band winds around itself. In this case a guide wall 27 (Figure 2) urges the steel band 15 downwards, and helps it winding into a roll by itself.

Figure 6 shows a second example of the embodiment, which is different from the first example described above in that the upper roller 3 is provided with flanges, and that the gears between the upper roller and the lower roller are eliminated. The upper roller 3 is used as an idler, and the lower roller shaft 4 is connected to the motor 9 having a speed reducer through the torque limiter 7. The lower roller shaft 4 is coaxial with the output shaft 10 of the motor 9.

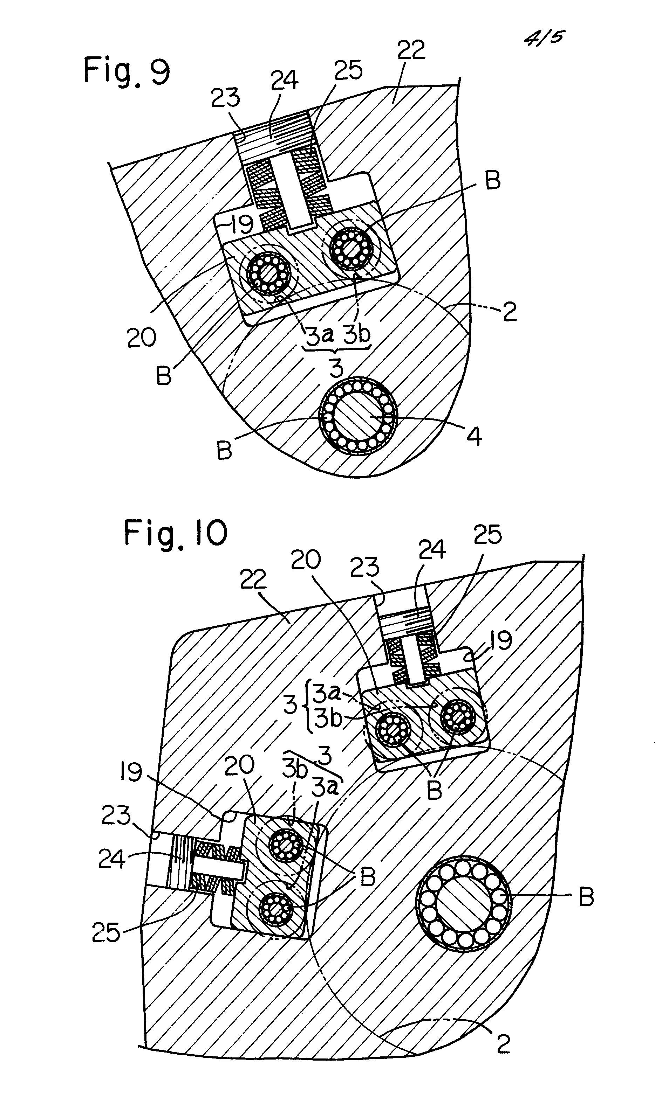

Figures 7 and 9 show a third example of the embodiment, which is different from the embodiments described above, in that the upper roller 3 is constituted by two rollers 3a and 3b carried on the free-moving bearing 20, which is biased toward the axis of the roller 2 by means of the coned disc spring 25. Under this embodiment the compressive force of each roller 3a, 3b may be small, but as a whole it can be increased. In addition, the steel band 15 is protected against a possible deformation due to an excessive compression, and is kept in full contact with the peripheral surface of the lower roller 2, thereby enlarging the contact area. Thus the steel band 15 is protruded and retracted with a stronger friction drive.

Figure 10 shows a fourth example of the embodiment, which is characterised in that the upper roller 3 comprises two groups each including rollers 3a and 3b, both of which are kept into contact with the lower roller 2 by means of the respective coned disc springs 25, wherein the lower roller 2 is connected to the motor 9.

In the embodiments described above an electric motor having a speed reducer is used, but instead of it a hydraulic or pneumatic motor can be used.

The band conveyor of the invention can convey a relatively heavy workpiece or mold to a work processing machine, such as a machine tool, an injection machine, a pressing machine. In this case the steel band 15 is provided with a securing means, such as a fastener, a clamp. In another application the clamp is attached to the top end of the steel band, thereby enabling the clamp to shift about. In a further application a sliding door is fixed to the top end of the steel band 15, whereby an outlet in the equipment is opened or closed by protruding or retracting the steel band. To enable the steel band to run straight it is preferred to make a guide groove additionally in the groove of T- or I-shape for guiding the workpiece, or in the side walls of the path of the steel band.

CLAIMS

1. A band conveyor for use in conveying a workpiece over a support means and comprising a band (15) reciprocatingly moveable in use upon the support means, a casing (1) for accommodating a rolled portion of the band, a first and second relatively moveable roller means (2 and 3), biasing means (25) for urging the respective roller means (2 and 3) together so as to grip the band (15) therebetween, and driving means (9) for driving the first roller means (2) selectively in either direction of rotation, characterised in that the biasing means (25) is adjustable to provide a variable degree of friction between the respective roller means and the band and in that the driving means includes a torque limiter (7).

2. A band conveyor as claimed in Claim 1 characterised in that both the first and second roller means (2 and 3) are driven by the driving means (9).

3. A band conveyor as claimed in Claim 2 characterised in that the first and second roller means (2 and 3) each comprise a single roller (2 and 3) and the first and second rollers respectively are connected to first and second gears (6a and 6b) which mesh to transmit drive from one roller to the other and wherein relative movement of the rollers is accommodated by backlash between the gears.

4. A band conveyor as claimed in Claim 1 characterised in that the first roller means (2) comprises a single driven roller (2) and the second roller means comprises a plurality of follower rollers (3a, 3b) which engage the band at intervals angularly spaced around the axis of the driven roller (2).

5. A band conveyor as claimed in Claim 4 characterised in that at least one pair of follower rollers are linked so as to share a common biasing means.

6. A band conveyor as claimed in any preceding claims characterised in that the biasing means comprises a plurality of coned springs (25) compressed between each roller or pair of rollers of the second roller means and respective adjustable stops (24) which are adjustable from outside of the casing.

7. A band conveyor as claimed in any preceding claim characterised in that the torque limiter (7) includes friction plates (12) transmitting drive from a gear (8b), the friction plates (12) being adjustably biased into contact with the gear (8b) to facilitate adjustment of the limit of transmitted torque.

8. A band conveyor as claimed in Claim 7 characterised in that the torque limiter (7) comprises a boss (11) secured to a shaft (4) of the first roller means (2), a gear (8b) rotatable on the boss (11), the gear (8b) being rotated by engagement with a mating gear (8a) driven by the driving means (9), friction plates (12) placed in tight contact with the gear (8b), a coned disc spring (13) biasing the friction plates (12) toward the boss (11) such that rotation of the gear (8b) is frictionally transmitted to the boss, and a nut (14) screwed to the end of the shaft (4) of the first roller means (2) for adjusting the bias exerted by the spring (13).

9. A band conveyor as claimed in any preceding claim characterised in that the casing (1) includes guide means (27) for urging the band into a roll when being driven into the casing.

10. A band conveyor as claimed in any preceding claim characterised in that the roller means include flanges for laterally guiding the band.

Fig. 1

Fig. 2

0205700

2/5

Fig. 3

Fig. 4

Fig. 5

Fig. 6

Fig. 7

Fig. 8

Fig. 9

Fig. 10

5/5

Fig.11

European Patent
Office

**EUROPEAN SEARCH REPORT**

0205700

Application number

EP 85 30 4658

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-B-1 126 830 (TH. KIESERLING & ALBRECHT) <br> * Column 1, line 51 - column 2, line 27; column 2, lines 40-43 * | 1-4,6-8,10 | B 23 Q 7/03 <br> B 65 H 20/02 <br> B 21 D 43/09 |
| D,Y | JP-A-57 026 923 <br><br> * Figures 2,4 * | 1-4,6-8,10 | |
| D,A | | 9 | |
| Y | DE-A-1 527 788 (DEMAG AG) <br> * Page 1, line 6 - page 2, line 11; page 2, lines 19-26 * | 4 | |
| A | | 5 | |
| Y | CH-A- 426 700 (H. RASTER KG MASCHINENFABRIK) <br> * Figure 1 * | 6 | |
| Y | DE-A-1 909 309 (STOLTENBERG) <br> * Figure 3; page 4, lines 7-17, 26-31 * | 7,8 | |
| Y | US-A-2 796 930 (A.J. BENNETT) <br> * Figure 3 * | 10 | |
| | --- -/- | | |

TECHNICAL FIELDS SEARCHED (Int. Cl.4)

B 23 Q
B 65 H
B 21 D
B 21 C
B 65 G

The present search report has been drawn up for all claims

| Place of search | Date of completion of the search | Examiner |
|---|---|---|
| THE HAGUE | 19-02-1986 | WEBER P.L.P. |

European Patent Office

**EUROPEAN SEARCH REPORT**

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-4 032 056 (SAKUMATSU ITO) <br> * Figure 1; column 5, lines 1-20 * <br> --- | 1-3 | |
| A | US-A-2 553 964 (I.S. EGGLESTON) <br> * Figures 3-5; column 2, line 53 - column 3, line 23 * <br> --- | 1-3 | |
| A | FR-A-1 362 225 (L. SCHULER AG) <br> * Page 2, column 1, line 54 - colummn 2, line 6; figure 1 * <br> ----- | 7,8 | |
| | | | TECHNICAL FIELDS SEARCHED (Int. Cl.4) |

*The present search report has been drawn up for all claims*

| Place of search | Date of completion of the search | Examiner |
|---|---|---|
| THE HAGUE | 19-02-1986 | WEBER P.L.P. |